Europäisches Patentamt

European Patent Office

Office européen des brevets

(19)

(11) Veröffentlichungsnummer: **0 261 386 B1**

# EUROPÄISCHE PATENTSCHRIFT

(45) Veröffentlichungstag der Patentschrift: **29.01.92**

(51) Int. Cl.⁵: **B23B 49/00**

(21) Anmeldenummer: **87111884.0**

(22) Anmeldetag: **17.08.87**

(54) **Tiefenanschlag.**

(30) Priorität: **24.09.86 DE 3632377**

(43) Veröffentlichungstag der Anmeldung:
**30.03.88 Patentblatt 88/13**

(45) Bekanntmachung des Hinweises auf die
Patenterteilung:
**29.01.92 Patentblatt 92/05**

(84) Benannte Vertragsstaaten:
**CH DE GB IT LI**

(56) Entgegenhaltungen:
DE-A- 2 705 410     DE-A- 3 126 245
DE-C- 348 099       US-A- 3 251 133
US-A- 3 779 663     US-A- 4 281 949
US-A- 4 521 967

(73) Patentinhaber: **ROBERT BOSCH GMBH
Postfach 50
W-7000 Stuttgart 1(DE)**

(72) Erfinder: **Blöchle, Hans, Dipl.-Ing.
Wiesenstrasse 21
W-7257 Ditzingen(DE)**
Erfinder: **Remmele, Bernhard
Dornröschenweg 52
W-7000 Stuttgart 80(DE)**
Erfinder: **Schmid, Wolfgang, Dipl.-Ing.
Reutestrasse 53
W-7024 Filderstadt 4(DE)**
Erfinder: **Wiesner, Herbert
Bussardweg 7
W-7022 Leinfelden-Echterdingen(DE)**

**Beschreibung**

Die Erfindung geht aus von einem Tiefenanschlag nach der Gattung des Hauptanspruchs. Aus der DE-OS 31 26 245 ist bereits ein Bohrtiefenmaßstab bekannt, der jedoch lediglich eine einfache Millimeterskala aufweist und bei dem jeweils eine Differenzrechnung notwendig ist, um den Maßstab für die gewünschte Bohrtiefe einzustellen.

Dieser Nachteil ist bei dem in der DE-OS 27 05 140 vorgeschlagenen Tiefenanschlag zwar vermieden, jedoch ist dieser im Aufbau wesentlich aufwendiger und teurer. Außerdem muß während des Bohrvorgangs zusätzliche Kraft für das Komprimieren der Druckfeder innerhalb der Tragelemente aufgebracht werden.

Vorteile der Erfindung

Der erfindungsgemäße Tiefenanschlag mit den kennzeichnenden Merkmalen des Hauptanspruchs hat demgegenüber den Vorteil, daß er sehr einfach im Aufbau ist, ohne weiteres vollständig in Kunststoff gefertigt werden kann und leicht anwendbar ist. Die Meßskala steht vor Festlegen der Bohrtiefe auf Null und ermöglicht daher ein einfaches Einstellen ohne Differenzrechnung. Außerdem ist die eingestellte Bohrtiefe auch nachträglich noch ablesbar.

Durch die in den Unteransprüchen aufgeführten Maßnahmen sind vorteilhafte Weiterbildungen und Verbesserungen des im Hauptanspruch angegebenen Tiefenanschlags möglich. Besonders vorteilhaft bei kleinen Bohrgeräten oder kurzen Bohrerlängen ist der Tiefenanschlag mit zwei Skalen nach dem zweiten Ausführungsbeispiel. Mit der zweiten Skala ist eine Nulljustierung und eine Tiefeneinstellung ohne Differenzrechnung in jedem Fall möglich - auch in den Fällen, in denen die einfachere Ausführung zu lang wäre. Damit ist dieser Tiefenanschlag sehr universell einsetzbar. Die sechskantige Durchbrechung hat den Vorteil, daß darin auch regelmäßig sechseckige Haltestangen wie sie bisher bei bekannten Vorrichtungen verwandt wurden, festgespannt werden können.

Zeichnung

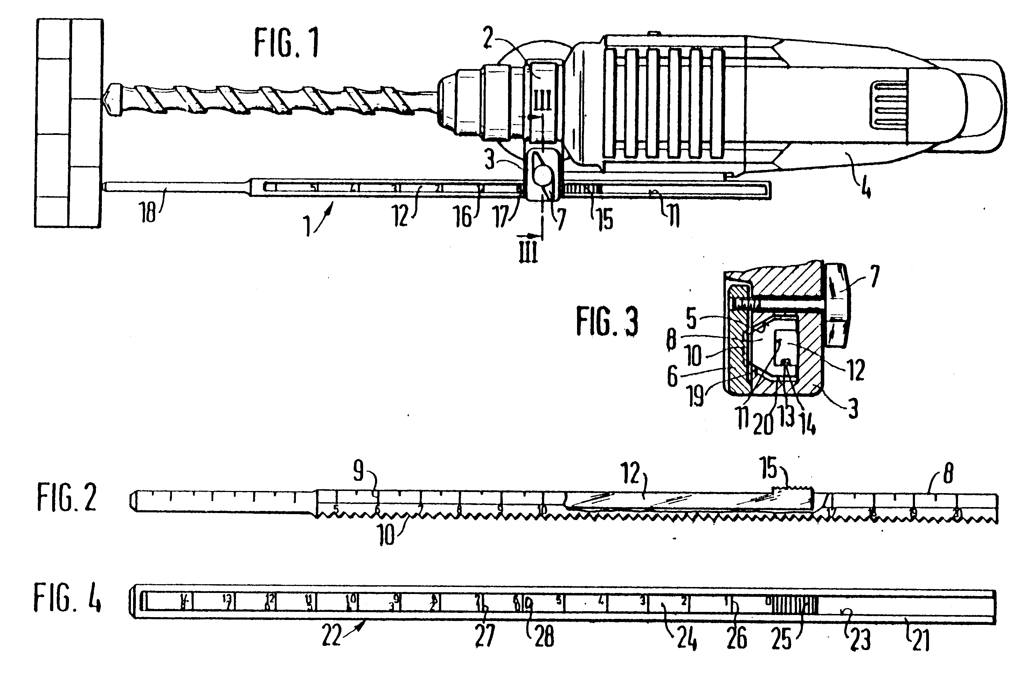

Zwei Ausführungsbeispiele der Erfindung sind in der Zeichnung dargestellt und in der nachfolgenden Beschreibung näher erläutert. Figur 1 zeigt das gesamte Bohrgerät mit Tiefenanschlag in Draufsicht, Figure 2 eine Seitenansicht des Tiefenanschlags und Figur 3 einen Querschnitt gemäß Linie III-III in Figur 1, Figur 4 zeigt ein zweites Ausführungsbeispiel eines Tiefenanschlags in Draufsicht.

Beschreibung der Ausführungsbeispiele

Der vorzugsweise sechskantige Tiefenanschlag 1 wird zweckmäßig an einer seitlich an einem Zusatzhandgriff 2 angeordneten Halterung 3 angebracht. Die Halterung 3 hat eine zur Achse des Bohrgeräts 4 parallele Durchbrechung 5, deren Querschnitt an den Querschnitt des Tiefenanschlags 1 angepaßt ist. Der lichte Querschnitt der Durchbrechung 5 ist von einer innen gezahnten Befestigungsplatte 6 einengbar. In die Befestigungsplatte 6 ist eine Flügelschraube 7 eingedreht, die die Halterung 3 durchgreift.

Der Tiefenanschlag 1 selbst besteht aus einem langen Stab 8, der seitlich eine Skala 9 aufweist. An der Unterseite des Stabes 8 befindet sich ein feines Zahnstangenprofil, das in Eingriff mit der Befestigungsplatte 6 gebracht werden kann. An der Oberseite des Stabes 8 ist eine Nut 11 eingelassen, in der ein Schieber 12 beweglich geführt ist. Gegen Herausfallen ist er durch eine in der Nut 11 angeordnete Führungsleiste 13, die in eine Nut 14 des Schiebers 12 eingreift, gesichert. Der Schieber weist an einem Ende einen herausstehenden Anschlag 15 auf, der verhindert, daß der Schieber 12 durch die Druchbrechung 5 hindurchgeschoben werden kann. In einem der Breite der Halterung 3 entsprechenden Abstand - von dem Anschlag 15 an gerechnet - beginnt eine Millimeterskala 16, so daß deren Nullpunkt mit der Ablesekante 17 übereinstimmt, wenn der Anschlag 15 an der Halterung 3 anliegt. Das vordere linke Ende des Stabes 8 trägt eine zylindrische Verjüngung 18, die das Messen von Bohrlochtiefen mit Hilfe der Skala 9 ermöglicht.

Der Stab 8 hat im Querschnitt eine Form (vgl. Figur 3), die aus einem trapezförmigen Teil 19, an dessen kürzerer paralleler Seite das Zahnstangenprofil 10 angebracht ist und einen daran anschließenden rechteckigen Teil 20 besteht, in dessen nach außen gerichteter breiter Seite die Nut 11 eingelassen ist.

Zur Einstellung des Tiefenanschlags wird das Bohrgerät 4 gegen eine ebene Fläche gehalten und die Schraube 7 gelöst, so daß das Zahnstangenprofil 10 außer Eingriff mit der Verzahnung der Befestigungsplatte 6 kommt. Nun läßt sich der gesamte Tiefenanschlag soweit nach vorne schieben, bis er ebenfalls an der Ebene anliegt. Der Schieber 12 bleibt dabei mit seinem Anschlag 15 an der Halterung 3 hängen, so daß der Nullpunkt der Skala 16 mit der Ablesekante 17 übereinstimmt. Nur wenn der Schieber vor dem Einstellvorgang zu weit nach hinten verschoben war, muß er durch einem kurzen Handgriff an dem geriffelten Anschlag 15 zur Anlage an die Halterung 3 gebracht werden.

Die gewünschte Voreinstellung der Bohrtiefe erhält man nun, indem der gesamte Tiefenanschlag um die an der Skala 16 direkt abzulesenden Bohrtiefe nach hinten versetzt wird, ohne die Position des Schiebers 12 gegenüber dem Stab 8 zu verändern. Anschließend wird der Tiefenanschlag durch Zudrehen der Schraube 17 sicher arretiert. Im allgemeinen reicht für Dübellöcher eine Tiefe von 50-60 mm. Um den Skalenbereich der Skala 16 noch etwas zu verlängern, kann deren Nullpunkt ohne Beeinträchtigung der Funktion direkt an die Vorderkante des Anschlags 15 verlegt werden. Dann gilt die hintere Kante der Halterung 3 als Ablesekante. Bei Durchgangsbohrungen ist eine Voreinstellung entbehrlich.

Im Ausführungsbeispiel nach Figure 4 trägt der Stab 21 des Tiefenanschlags 22 eine bis an dessen vordere Spitze durchgehende Nut 23. Der Schieber 24 ist gegenüber dem ersten Ausführungsbeispiel um die Erstreckung der Verjüngung 18 verlängert. Er trägt eine bei seinem Anschlag 25 mit Null beginnende Skala 26 und eine zweite, in diesem Fall bei der Marke 60 mm der ersten Skala 26 beginnende Skala 27. Vor dem Nullpunkt der Skala 27 ist ein leicht erhöhter Nocken 28 als Einstellhilfe angebracht, der unter leichtem Widerstand auch durch die Durchbrechung 5 hindurchgeschoben werden kann. Der Nullpunkt der Skala 27 kann selbstverständlich auch um ein oder mehrere Zentimeter nach vorn oder hinten verlegt werden.

Diese Ausführung kann für Bohrlöcher bis etwa 150 mm als Tiefenanschlag dienen. Die zweite, zweckmäßig farblich gegen die erste abgesetzte Skala 27 wird bei kleinen Bohrgeräten mit kurzen Bohrfuttern und bei kurzen Bohrerlänge verwandt. Dabei kann es nämlich vorkommen, daß sich die erste Skala nicht auf den Nullpunkt justieren läßt, weil der Tiefenanschlag 22 zu lang ist. Um in diesem Fall ein Differenzrechnen entbehrlich zu machen, wird die zweite Skala 27 des Schiebers 24 auf Null gestellt, wobei der Nocken 28 als Anschlag dient, und die Bohrtiefe weiter wie im ersten Ausführungsbeispiel eingestellt.

Die Befestigung des Tiefenanschlags mit der Befestigungsplatte 6 und der Schraube 7 kann durch einen beliebigen anderen Spannmechanismus ersetzt werden, wie Spannzange, und unter Federeinwirkung stehendes Verriegelungselement, exzentrisches Klemmelement usw.

## Patentansprüche

1. Tiefenanschlag (1) für Bohrgeräte mit Halterung (3) sowie mit einem seitlich an der Halterung (3) angeordneten und gegenüber dieser längsverschieblichen Stab (8), dessen vorderes Ende als Anschlag zur Begrenzung der Bohrtiefe dient, dadurch gekennzeichnet, daß sich in einer Nut (11) des Stabes (8) längsverschieblich ein Schieber (12) mit Skala (16) befindet, daß der Schieber (12) einen festen Anschlag (15) gegenüber der Halterung (3) aufweist, daß bei Anlage des Anschlags (15) an der Halterung (3) der Nullpunkt der Skala (16) mit einer Ablesekante (17) der Halterung (3) übereinstimmt, und daß der Stab (8) zur Einstellung der Bohrtiefe gemeinsam mit dem Schieber (12) in der Halterung (3) um das gewünschte Maß zurückversetzbar ist.

2. Tiefenanschlag nach Anspruch 1, dadurch gekennzeichnet, daß der Stab (8) ein Zahnstangenprofil aufweist.

3. Tiefenanschlag nach Anspruch 1 oder 2, dadurch gekennzeichnet, daß der Stab (8) am vorderen Ende eine zylindrische Verjüngung aufweist.

4. Tiefenanschlag nach einem der vorhergehenden Ansprüche, dadurch gekennzeichnet, daß der Stab (8) sechskantig ist und aus einem Teil (19) mit trapezförmigem Querschnitt und einem in diesen übergehenden Teil (20) mit rechteckigem Querschnitt besteht, in dessen nach außen gerichtete breite Seite die Nut (11) eingelassen ist.

5. Tiefenanschlag nach einem der vorhergehenden Ansprüche, dadurch gekennzeichnet daß der Schieber (12) eine zweite Skala (27) besitzt, deren Nullpunkt gegenüber dem der ersten Skala (26) nach vorn, z.B. in die Mitte der ersten Skala, verlegt ist.

6. Tiefenanschlag nach einem der vorhergehenden Ansprüche, dadurch gekennzeichnet, daß der Nullpunkt der Skala (16) in festem Abstand zu dem Anschlag (15) des Schiebers (12) angeordnet ist.

## Claims

1. Depth stop (1) for drilling tools, having a holder (3) as well as a bar (8) which is arranged laterally on the holder (3) and is longitudinally displaceable relative to the latter and whose front end serves as a stop for limiting the drilling depth, characterised in that a slide (12) having a scale (16) is located in a longitudinally displaceable manner in a groove (11) of the bar (8), in that the slide (12) has a fixed stop (15) relative to the holder (3), in that, when the stop (15) bears against the holder (3), the zero point of the scale (16) coincides with a reading edge (17) of the holder (3), and in that the bar (8), to set the drilling depth, can be shifted back to the desired extent together with the slide (12) in the holder (3).

2. Depth stop according to Claim 1, characterised in that the bar (8) has a toothed-rack profile.

3. Depth stop according to Claim 1 or 2, characterised in that the bar (8) has a cylindrical narrowed portion at the front end.

4. Depth stop according to one of the preceding claims, characterised in that the bar (8) is hexagonal and consists of a part (19) having a trapezoidal cross-section and a part (20) which merges into this part (19) and has a rectangular cross-section and in whose wide side directed to the outside the groove (11) is made.

5. Depth stop according to one of the preceding claims, characterised in that the slide (12) has a second scale (27) whose zero point is shifted forward relative to that of the first scale (26), e.g. into the centre of the first scale.

6. Depth stop according to one of the preceding claims, characterised in that the zero point of the scale (16) is arranged at a fixed distance from the stop (15) of the slide (12).

**Revendications**

1. Butée de profondeur (1) pour perceuses avec une tige (8) pouvant coulisser longitudinalement disposée sur le côté de la fixation et contre elle, dont l'extrémité antérieure sert de butée pour limiter la profondeur de perçage, caractérisée en ce que dans une rainure (11) de la tige (8) se trouve un coulisseau (12) avec échelle (16) pouvant coulisser en longueur, que le coulisseau (12) présente une butée fixe (15) vis-à-vis de la fixation (3) qu'au contact de la butée (15) sur la fixation (3) le zéro de l'échelle (16) correspond à un bord de lecture (17) de la fixation (3) et qu on peut déplacer de la valeur souhaitée la tige (8) pour régler la profondeur de perçage avec le coulisseau (12) dans la fixation (3).

2. Butée de profondeur selon la revendication 1, caractérisée en ce que la tige présente un profilé en crémaillère.

3. Butée de profondeur selon la revendication 1 ou 2, caractérisée en ce que la tige (8) présente à son extrémité antérieure un rétrécissement cylindrique.

4. Butée de profondeur selon l'une des revendications précédentes, caractérisée en ce que la tige (8) est hexagonale et comprend une partie (19) à section trapézoïdale et une partie (20) qui se raccorde à l'autre, à section carrée, dans laquelle on ménage la rainure (11) avec sa face large dirigée vers l'extérieur.

5. Butée de profondeur selon l'une des revendications précédentes, caractérisée en ce que le coulisseau (12) possède une deuxième échelle (27), dont le zéro est décalé vers l'avant par rapport à la première échelle, par exemple au milieu de la première échelle.

6. Butée de profondeur selon l'une des revendications précédentes, caractérisée en ce qu'on place le zéro de l'échelle (16) à une distance fixe de la butée (15) du coulisseau (12).

FIG. 1

FIG. 3

FIG. 2

FIG. 4

EP 0 261 386 B1